# EUROPEAN PATENT APPLICATION

(11) **EP 1 541 209 A1**
(43) Date of publication of application: **15.06.2005**
(21) Application number: 03795366.8
(22) Date of filing: 10.09.2003
(51) Int. Cl.: A63F 13/12, G06F 13/00

(54) **SPATIAL POSITION SHARING SYSTEM, DATA SHARING SYSTEM, NETWORK GAME SYSTEM, AND NETWORK GAME CLIENT**

(30) Priority: 16.09.2002 JP 2002309014
(71) Applicant: Genki Co., Ltd., Tokyo 169-0072 (JP)
(72) Inventor: SUNAZUKA, Yoshinari, c/o Genki Co., Ltd., Tokyo 169-0072 (JP); KAWAI, Shuhei, c/o Genki Co., Ltd., Tokyo 169-0072 (JP); KIMURA, Tomoharu, c/o Genki Co., Ltd., Tokyo 169-0072 (JP)
(74) Representative: Winter, Brandl, Fürniss, Hübner, Röss, Kaiser, Polte Partnerschaft Patent- und Rechtsanwaltskanzlei
(86) International application number: PCT/JP2003/011565
(87) International publication number: WO 2004/024267

(57) **Abstract**

In a client (16), current position information and predicted future position information for an object that have been generated in another client (16) are received, and estimated current position information for the same object in virtual space are sequentially generated based on these items of information. A game server (12) controls transfer of position information received from non-specified clients to specified clients. Further, at the client (16), in a message input mode, current position information for an object is generated automatically or semi-automatically, and that current position information is transmitted to the game server (12).

## Description

### TECHNICAL FIELD

The present invention relates to a spatial position sharing system, a data sharing system, a network game system and a client for a network game.

### BACKGROUND ART

The popularity of network games (on-line games) has been increasing. With a network game, it is possible to compete with another player while remaining at home, or to play as a team, and it is possible to make games more enjoyable than in the past.

However, network games of the related art have the following problems.
(1) In a network game where a plurality of players share virtual space (game space), it is difficult to share the position of an object etc. determined in real time in a particular client (game terminal) in another client at the same time.
(2) Similarly, it is extremely difficult to share various data determined in real time (real time data) in a particular client in another client at the same time.
(3) There may be cases where if many objects exist in the same virtual space progress of the game is impeded. Also, if data relating to many objects is always shared with all clients, network traffic becomes overwhelming.
(4) Network games for making on-line chat (message interchange) between players enjoyable have already been proposed, but chatting online while operating on objects is extremely difficult.

The present invention has been conceived in view of the above described situation, and a first object of the invention is to provide a special position sharing system, special position sharing device, program and special position sharing method capable of pseudo-sharing of special positions of position shared objects that sequentially change in virtual space between devices, while suppressing communication.

A second object of the present invention is to provide a data sharing system, data sharing device, program and data sharing method capable of pseudo-sharing of sequentially changing data between devices, while suppressing traffic.

A third object of the present invention is to provide a network game system capable of allowing movement of virtual space relating to a specified client smoothly in another virtual space, and a control method for such a network game system.

A fourth object of the invention is to provide a network game client, program, and a control method for a network game client, capable of easily carrying out online chat.

### DISCLOSURE OF THE INVENTION

(1) In order to achieve the above described objects, a special position sharing system of the present invention comprises a first device and a second device, the first device comprising current position information generating means for sequentially generating current position information for a position shared object in virtual space, predicted future position information generating means for sequentially generating predicted future position information for the position shared object in the virtual space; and information transmission means for sequentially transmitting the generated current position information and predicted future position information, the second device comprising information receiving means for receiving the current position information and the predicted future position information transmitted from the first device, and estimated current position information generating means for sequentially generating estimated current position information for the position shared object in the virtual space based on the received current position information and predicted future position information.

Also, a special position sharing device of the present invention comprises current position information generating means for sequentially generating current position information for the position shared object in virtual space, predicted future position information generating means for sequentially generating predicted future position information for the position shared object in the virtual space, and information transmission means for sequentially transmitting the generated current position information and predicted future position information.

Also, a special position sharing device of the present invention comprises information receiving means for receiving current position information for a position shared object in virtual space and predicted future position information of the position shared object in the virtual space sequentially generated in another device and sequentially transmitted from the other device, and estimated current position information generating means for sequentially generating estimated position information for the position shared object in the virtual space based on the received current position information and predicted future position information.

A program of the present invention causes a computer to function as current position information generating means for sequentially generating current position information for a position shared object in virtual space, predicted future position information generating means for sequentially generating predicted future position information for the position shared object in the virtual space, and information transmission means for sequentially transmitting the generated current position information and predicted future position information. The program can be stored in a computer readable information storage medium such as CD-ROM, DVD-ROM or ROM cartridge, and read from the medium by the computer.

A program of the present invention causes a computer to function as information receiving means for receiving current position information for a position shared object in virtual space and predicted future position information of the position shared object in the virtual space sequentially generated in another device and sequentially transmitted from the other device, and estimated current position information generating means for sequentially generating estimated current position information for the position shared object in the virtual space based on the received current position information and predicted future position information. The program can be stored in a computer readable information storage medium such as CD-ROM, DVD-ROM or ROM, and read from the medium by the computer.

A special position sharing method of the present invention comprises a current position information generating step for, in a first device, sequentially generating current position information of a position shared object in virtual space, a predicted future position information generating step for, in the first device, sequentially generating predicted future position information of the position shared object in the virtual space, information transmission step for, in the first device, sequentially transmitting the generated current position information and predicted future position information, an information receiving step for, in a second device, receiving the current position information and the predicted future position information transmitted from the first device, and an estimated current position information generating step for, in the second device, sequentially generating estimated current position information for the position shared object in the virtual space based on the received current position information and the predicted future position information.

A special position sharing method of the present invention also comprises an information receiving step for receiving current position information for a position shared object in virtual space and predicted future position information of the position shared object in the virtual space sequentially generated in another device and sequentially transmitted from the other device, and an estimated current position information generating step for sequentially generating predicted future position information for the position shared object in the virtual space based on the received current position information and predicted future position information.

With the present invention, current position information and predicted future position information for a position shared object are sequentially generated in the first device, and that information is sequentially transmitted. In the second device, that information is received, and estimated current position information for the position shared object is sequentially generated based on this information. Here, the current position information represents a current position of a position shared object in virtual space. Predicted future position information represents predicted position of the position shared object in virtual space. Further, the estimated current position information represents estimation results for current position of the position shared object in virtual space. Current position information generated in the first device is already old by the time it is received at the second device, but with the present invention, since predicted future position information is transmitted from the first device and the second device receives this information, the current position of the position shared object can be estimated with high precision close to the current position information generated at the same time in the first device, that is, it is possible to generate accurate estimated current position information. Also, since it is possible to make the information amount of the current position information and the predicted future position information comparatively small, according to the present invention it is possible to share current position of a position shared object in virtual space while suppressing traffic.

In one aspect of the present invention, the current position information represents current time and position of the position shared object in the virtual space at the current time. In this way, in the second device it is possible to determine at what position the position shared object is at what point in time, and it becomes possible to generate estimated current position information with higher precision.

Also, in one aspect of the present invention, the predicted future position information also represents a future time when the position shared object is positioned at the predicted position in the virtual space. In this way, in the second device, it is possible to determine whether at which position the position shared object is at what time is being predicted, and it becomes possible to generate estimated current position information with higher precision.

In this aspect, the predicted future position information generating means may determine the future time based on communication conditions between the first and second device. If communication conditions between the first and second device are bad, in cases where time is required until the current position information and the predicted future position information reach the second device from the first device, in the first device even if predicted future position information for the near future are generated, they are not useful in the second device. If future time relating to the predicted future position information is determined based on communication conditions between the first and second device, it is possible to provide more meaningful predicted future position information to the second device, and it is possible to generate estimated current position information with higher precision.

In one aspect of the present invention, the current position information generating means sequentially generates the current position information based on operation information input by a user of the first device, and the predicted future position information generating means sequentially generates the predicted future position information based on the operation information. According to this aspect, in cases where the amount of operation information is greater than the position information, it is possible to share current position of a position shared object in the first and second device while suppressing traffic.

In one aspect of the present invention, the predicted future position information generating means generates the predicted future position information based on the current position information generated by the current position information generating means. In this case, a current position information storage means for storing a plurality of items of current position information sequentially generated by the current position information generating means may be further provided, and the predicted future position information generating means may generate the predicted future position information based on the plurality of items of current position information stored in the current position information storage means. In this way, even if a plurality of items of current position information are not stored in the second device, and a plurality of items of current position information are not transmitted to the second device from the first device, it is possible to generate estimated current position information based on predicted future position information that is based on that information.

Also, with this aspect of the present invention, the estimated current position information generating means newly generates the estimated current position information further based on the already generated estimated current position information. In this way, for example, it is possible to suppress sudden changes in the sequentially generated estimated current position information in the second device. In this aspect, the estimated current position information generating means preferably generates dummy estimated current position information for the position shared object in virtual space based on received current position information and predicted future position information, and newly generates the estimated current position information based on the already generated estimated current position information and the dummy estimated current position information. At this time, the estimated current position information generating means preferably generates a position of an internal dividing point or an external dividing point of a position represented by received current position information or a position represented by the predicted future position information as the dummy estimated current position information.

Also, in one aspect of the present invention, the first device further comprises current attitude information generating means for sequentially generating current attitude information for the position shared object in virtual space, predicted future attitude information generating means for sequentially generating predicted future attitude information for the position shared object in the virtual space, and attitude information transmission means for sequentially transmitting the generated current attitude information and predicted future attitude information, and the second device further comprises attitude information receiving means for receiving the current attitude information and the predicted future attitude information transmitted from the first device; and estimated current attitude information generating means for sequentially generating estimated current attitude information for the position shared object in the virtual space based on the received current attitude information and predicted future attitude information. In this way, it is also possible to share a current attitude of the position shared object in the first and second device.

(2) A data sharing system of the present invention comprises a first device and a second device, the first device comprising current data generating means for sequentially generating current data, predicted future data generating means for sequentially generating predicted future data, and data transmission means for sequentially transmitting the generated current data and predicted future data, the second device comprising data receiving means for receiving the current data and the predicted future data transmitted from the first device, and estimated current data generating means for sequentially generating estimated current data based on the received current data and predicted future data.

A data sharing device of the present invention also comprises current data generating means for sequentially generating current data, predicted future data for sequentially generating predicted future data, and data transmission means for sequentially transmitting the generated current data and the predicted future data.

Also, a data sharing device of the present invention comprises data receiving means for receiving current data and predicted future data sequentially generated in another device and sequentially transmitted from the other device, and estimated current data generating means for sequentially generating estimated current data based on the received current data and predicted future data.

A program of the present invention causes a computer to function as current data generating means for sequentially generating current data, predicted future data generating means for sequentially generating predicted future data, and data transmission means for sequentially transmitting the generated current data and the predicted future data. The program can be stored in a computer readable information storage medium such as CD-ROM, DVD-ROM or ROM cartridge, and read from the medium by the computer.

A program of the present invention also causes a computer to function as data receiving means for receiving current data and predicted future data sequentially generated in another device and sequentially transmitted from the other device, and estimated current data generating means for sequentially generating estimated current data based on the received current data and predicted future data. The program can be stored in a computer readable information storage medium such as CD-ROM, DVD-ROM or ROM cartridge, and read from the medium by the computer.

A data sharing method of the present invention comprises a current data generating step for, in a first device, sequentially generating current data, a predicted future data generating step for, in the first device sequentially generating predicted future data, a data transmission step for, in the first device, sequentially transmitting the generated current data and predicted future data, data receiving step for, in a second device, receiving the current data and the predicted future data transmitted from the first device, and an estimated current data generating step for, in the second device, sequentially generating estimated current data based on the received current data and predicted future data.

A data sharing method of the present invention also comprises a data receiving step for receiving current data and predicted future data sequentially generated in another device and sequentially transmitted from the other device and an estimated current data generating step for sequentially generating estimated current data based on the received current data and predicted future data.

With the present invention, in the first device current data and predicted future data are sequentially generated, and this data is sequentially transmitted. At the second device, the data is received, and estimated current data is sequentially generated based on the received data. Here, current data is data constituting a shared object, and is sequentially generated in the first device. Also, the predicted future data is data likely to be generated in the future in the first device. The estimated current data is data likely to be generated in the first device at the current time, specifically, the estimated current data represents results of estimation for data being generated in the first device. Current data generated in the first device is already old by the time it has been received at the second device, but with this invention, predicted future data is transmitted from the first device, and this data is received in the second device, which means that current data is estimated with high precision, and it is possible to generate data that is close to the current data generated at the same time in the first device, namely accurate estimated current data.

(3) A network game system of the present invention includes a server and a plurality of clients, wherein the plurality of clients respectively comprise space data storage means for storing space data representing a virtual space, and position information transmission means for transmitting position information corresponding to the client in the virtual space to the server, and the server comprises position information receiving means for receiving position information from the plurality of clients, client specifying means for specifying some from among the plurality of clients, and position information transfer means for transferring all or some of the position information received from the plurality of clients to the plurality of clients, while restricting transfer of position information received from clients that have not been specified by the client specifying means to clients that have been specified by the client specifying means, the plurality of clients respectively comprising transfer data receiving means for receiving position information transferred from the server, and game processing means for executing a game processing based on position information received by the transfer data receiving means and space data stored in the space data storage means.

Also, a control method of the present invention for a network game system comprising a server and a plurality of clients comprises a position information transmission step, in each client, for transmitting position information corresponding to the client in a virtual space to the server, a position information receiving step, in the server, for receiving position information received from the plurality of clients, a client specifying step, in the server, for specifying some of the plurality of clients, a position information transfer step, for, in the server, transferring all or some of the position information received from the plurality of clients to the plurality of clients, while restricting transfer of position information received from clients that have not been specified in the client specifying step to clients that have been specified in the client specifying step, a transferred data receiving step, in each client, for receiving position information transferred from the server, and a game processing step, in each client, for executing game processing based on position information received in the transferred data receiving step and space data representing the virtual space.

With the present invention, game processing is executed in each client based on position information and space data transferred from the server. At this time, transfer of position information received from clients that have not been specified in the client specifying step (non-specified clients) to clients that have been specified in the client specifying step (specified clients) is limited. Therefore, at the specified clients, game processing relating to non-specified clients is limited. In this way, game processing based on position information corresponding to non-specified clients is limited, and virtual space handled in the specified clients (specified virtual space) can be made different to virtual space handled in the non-specified clients (non-specified virtual space). Space data storage means contained in the plurality of clients can store space data representing virtual space of the same structure. In this way, it is possible to move from non-specified virtual space to specified virtual space more smothly. Position information may represent position itself, or may represent basic information for determining position, such as for example, movement direction or movement distance.

With one aspect of the present invention, the position information transfer means separately transfers position information received from specified clients, and position information received from non-specified clients, to the non-specified clients, and the game processing means separately displays an image relating to position information transmitted from specified clients and an image relating to position information transmitted from non-specified clients. In this way, it is possible to allow suitable display of an image relating to a specified client at a non-specified client.

In this case, the game processing means may limit interference processing between object arranged at position represented by position information transmitted from specified clients, and objects arranged at positions represented by position information transmitted from non-specified clients. Interference processing is, for example, determining whether or not there is interference between objects, such as collision or contact, and executing game processing that deals with that. In this way, in non-specified clients, it is possible to cause objects relating to specified clients to appear appropriately.

In one aspect of the present invention, there is further provided specification cancellation means for canceling specification by the client specifying means, wherein, when specification by the client specifying means for a client containing the game processing means is canceled, the game processing means limits interference processing for objects arranged at positions represented by position information corresponding to the client, and objects arranged at positions represented by position information transmitted from non-specified clients, until a specified time. The specified time is, for example, 1) the time when it is determined that there is no interference for objects corresponding to client and objects corresponding to non-specified clients, 2) when it is determined that a distance between objects corresponding to the client and objects corresponding to non-specified clients exceeds a specified distance, and 3) when a specified time has elapsed since the specification is cancelled. According to this aspect, it is possible to return smoothly from a specified client to a non-specified client.

(4) A client of the present invention is for a network game, used in a network game in which a virtual space is shared by a plurality of clients, for causing movement of objects corresponding to each client in the virtual space, comprising input means for inputting signals, mode determining means for determining whether an operating mode of the client is an object operation mode or a message input mode, first position information generating means for, in the object operation mode, generating position information relating to a position of an object corresponding to the client based on signals input by the input means, second position information generating means for, in the message input mode, generating position information relating to position of the object corresponding to the client while limiting a degree to which the position information is based on signals input by the input means, instead of the first position generating means, position information transmission means for transmitting the position information generated by the first or second position information generating means, message information generating means for, in the message input mode, generating message information based on signals input by the input means, and message information transmission means for transmitting the message information generated by the message information generating means.

Also, program of the present invention causes a computer to function as a client, for a network game, used in a network game in which a virtual space is shared by a plurality of clients, for causing movement of objects corresponding to each client in the virtual space, the program causing the computer to function as input means for inputting signals, mode determining means for determining whether an operating mode of the client is an object operation mode or a message input mode, first position information generating means for, in the object operation mode, generating position information relating to a position of an object corresponding to the client based on signals input by the input means, second position information generating means for, in the message input mode, generating position information relating to position of the object corresponding to the client while limiting a degree to which the position information is based on signals input by the input means, instead of the first position generating means, position information transmission means for transmitting the position information generated by the first or second position information generating means, message information generating means for, in the message input mode, generating message information based on signals input by the input means, and message information transmission means for transmitting the message information generated by the message information generating means. The program can be stored in a computer readable information storage medium such as CD-ROM, DVD-ROM or ROM cartridge, and read from the medium by the computer.

Also, a control method of the present invention, for a client, for a network game, used in a network game in which a virtual space is shared by a plurality of clients, to cause movement of objects corresponding to each client in the virtual space, comprises a mode determining step for determining whether an operating mode of the client is an object operation mode or a message input mode, a first position information generating step for, in the object operation mode, generating position information relating to a position of an object corresponding to the client based on signals input by input means, a second position information generating step for, in the message input mode, generating position information relating to position of the object corresponding to the client while limiting a degree to which the position information is based on signals input by the input means, instead of the first position generating step, a position information transmission step for transmitting the position information generated in the first or second position information generating steps, a message information generating step for, in the message input mode, generating message information based on signals input by the input means, and a message information transmission step for transmitting the message information generated in the message information generating step.

With the present invention, object operation mode or message input mode is determined. In the object operation mode, position information relating to an object is generated based on signals input using input means, and this information is transmitted. In message input mode, position information relating to the object is generated while limiting a degree to which the position information is based on signals input using the input means, and this information is transmitted. That is, in message input mode, for example, position information relating to the object is generated 1) not based on signals input using the input means, or 2) based on, among a plurality of types of signals input using the input means, fewer signals than signals referenced in the object operation mode. In the message input mode, message information is also generated based on signals input using the input means, and this information is transmitted. According to the present invention, in the message input mode, position information relating to an object and limited a degree based on signal input using input means are generated automatically or semi-automatically, which means that it is possible to suitably transmit message information. Position information may represent position itself, or may represent basic information for determining position, such as direction of movement and movement distance.

With one aspect of the present invention, the second position information generating means generates position information relating to position of the object corresponding to the client so as to suppress variation in game conditions. In this way, in the message input mode it is possible to make it difficult for changes in game conditions, such as a positional relationships between an object corresponding to another client and an object corresponding to the client or client ranking, to arise.

With this aspect, the second position information generating means may generate position information relating to position of the object corresponding to the client, based on a distance between the object corresponding to the client and an object corresponding to another client. In this way, it is possible to make if difficult for variations in game conditions to occur by suppressing a distance between, for example, the object corresponding to the client and an object corresponding to another client in the client.

### BRIEF DESCRIPTION OF THE DRAWINGS

Fig. 1 is a drawing showing the overall structure of a network game system of an embodiment of the present invention.
Fig. 2 is a drawing showing an example of virtual space.
Fig. 3 is a drawing showing one example of a lobby screen.
Fig. 4 is a drawing showing one example of a competition screen.
Fig. 5 is a functional block diagram of a game server.
Fig. 6 is a functional block diagram of a game client.
Fig. 7 is a drawing showing a lobby mode vehicle position table stored in the game server.
Fig. 8 is a drawing showing an address table stored in the game server.
Fig. 9 is a drawing showing a competition mode vehicle position table stored in the game server.
Fig. 10 is a drawing showing real time vehicle data stored in each game client.
Fig. 11 is a drawing for describing estimation processing for current position information.
Fig. 12 is a functional block diagram of a data sharing system of the present invention.

### BEST MODE FOR CARRYING OUT THE INVENTION

One embodiment of the present invention will now be described in the following based on the drawings.

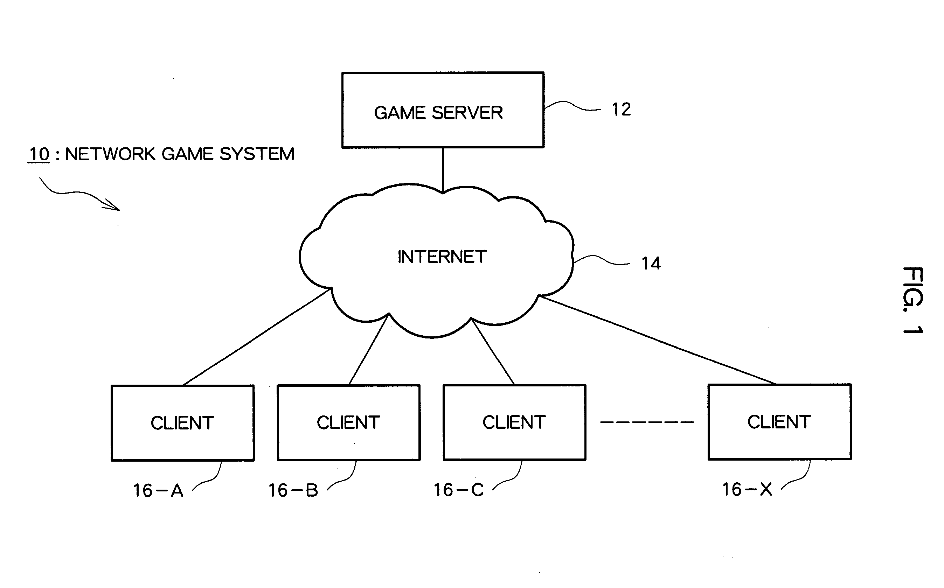

Fig. 1 is a drawing showing the overall structure of a network game system of an embodiment of the present invention. In Fig. 1, this network game system 10 comprises a game server 12, and a plurality of clients 16-A, 16-B ..., 16-X. The game server 12 and the clients 16 are all directly or indirectly connected to the internet 14, and data communication is possible between at least the server and the clients. Here, the internet 14 is used as a data communication network, but it is also possible to use another data communication network, such as a cable television network.

The game server 12 includes, for example, a well known server computer system, and manages the entire network game. Here, a vehicle race game is managed by the game server 12. On the other hand, the clients (game terminals) 16 include a computer system such as a well known personal compute system, a household game device, an arcade game device, a portable game device, a portable telephone, or a personal data assistance etc., which a player (user) uses to play a network game.

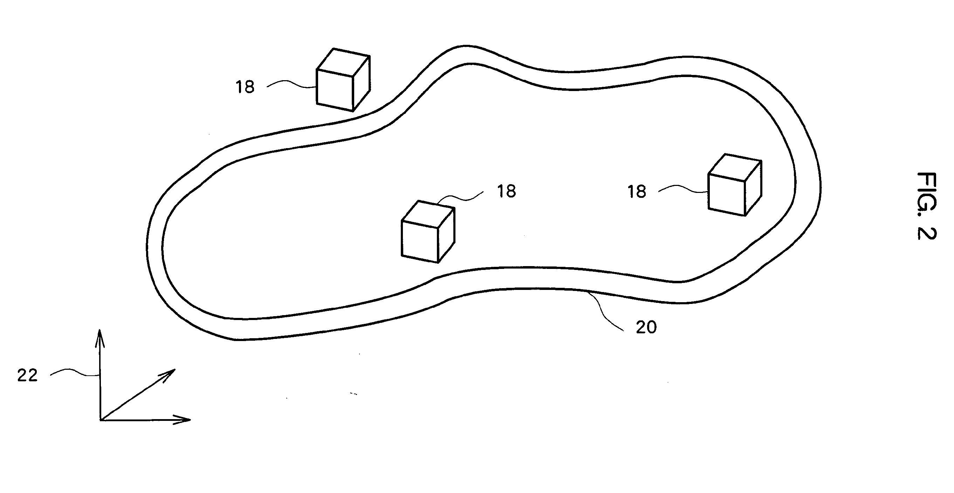

Fig. 2 is a drawing showing virtual space (game space, object space) shared by the clients 16 and the game server 12. As shown in Fig. 2, this virtual space contains a looped course (object) 20 constituting a stage for a vehicle race, and buildings (objects) 18 arranged around the course. Space data indicating the virtual space shown in Fig. 2, that is, data representing position, attitude, shape and design of a static object such as the looped course 20 and buildings 18 arranged inside the virtual space, and moving object data, that is data representing shape and design of a moving object, such as a vehicle object, etc., are stored in advance in the game server 12 and the clients 16, and only position and attitude of a moving object such as a vehicle object are exchanged between the server 12 and the clients 16 during a game. At this time, the position and attitude of a moving object are exchanged being described in a world coordinate system 22 installed in the virtual space shown in Fig. 2.

As described above, the network game of this embodiment is a vehicle race game, vehicle objects corresponding to each client 16 are arranged on the looped course 20, and caused to move based on position information (constituted of current position information and predicted future position information, as will be described later) transmitted from each client 16. Player cars (objects) that are subjected to operation by a player, and non-player cars (objects) that are not subjected to operation by a player, are included in the vehicle objects corresponding to each client 16. Specifically, position information relating to player cars is transmitted from clients 16 that are in lobby mode, which will be described later, to the game server 12. Also, position information relating to player cars and non-player cars is transmitted from clients 16 that are in competition mode, which will be described later, to the game server 12. Also, in the game server 12 vehicle objects are independently arranged on the looped course 20, and these objects are caused to move,

On the looped course 20, a start line has not been specially set, and if competition start conditions are arranged between specified players, a competition between two players starts from that point in time. In this competition, the same points or difference points corresponding to a difference in player level are assigned to the two players in advance, respective points are reduced depending on tactical situations, and of the points assigned to either player become zero, it is determined that that player has lost. In more detail, if a player car operated by one player passes a player car operated by another player, the points assigned to the player who was passed are reduced. If a distance between the player cars being operated by two players opens up, the points assigned to the player who is behind are reduced because of a drop in speed corresponding to this distance. Also, if a player car being operated by any player touches another vehicle object, the points assigned to that player are reduced. Here, the above described rules are adopted, but the present invention can also be applied to a network game adopting other rules. Also, a vehicle race between two people has been taken as an example, but it is also possible to have a competition with more people than that.

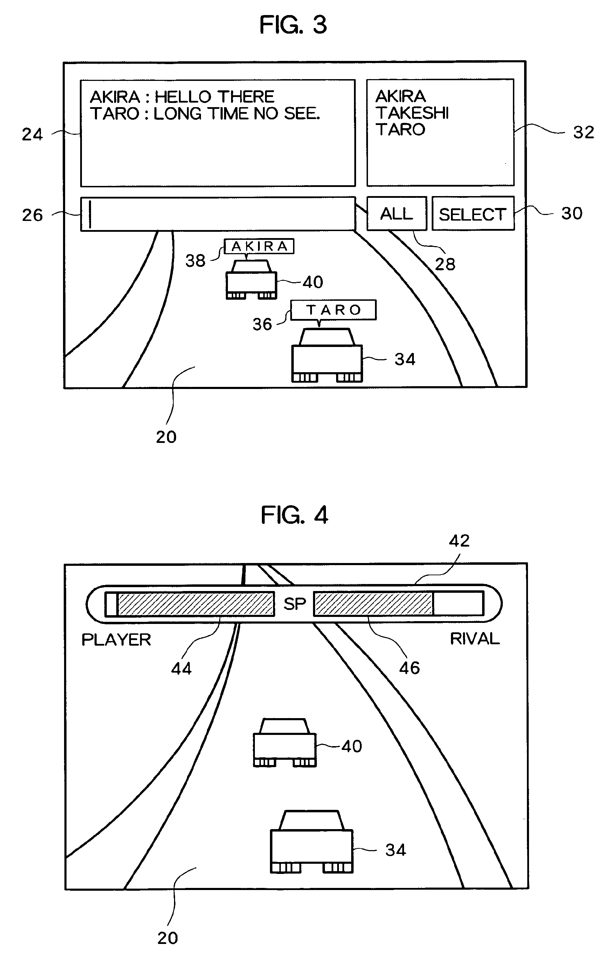

Fig. 3 is a drawing showing a lobby screen displayed in a client 16. Before determining competition start conditions, specifically in the lobby mode, the lobby screen shown in Fig. 3 is displayed in each client 16. The lobby screen shown in Fig. 3 mainly shows the appearance of virtual space from the view point of driving a player car 34 corresponding to a client 16 in the same virtual space. Here, the appearance of a player car 34 of a player in front of the screen using the client 16 is displayed looking from the rear, the appearance of a player car 40 of another player is displayed above this, and the player car 34 traveling behind the player car 40 on the looped course 20 is shown. Also, marks 36 and 38 representing IDs of players manipulating the player cars are respectively displayed on the player cars 34 and 40. Display of the marks 36 and 38 can be suppressed to all or part of the mark, as required. In this lobby screen, a player's own player car, player cars manipulated by players using another client 16 in lobby mode, and non-player cars manipulated by the game server 12 are displayed, and at the same time player cars manipulated by players using other clients 16 that are in competition mode, which will be described later, are displayed in a semi-transparent manner. Therefore, the semi-transparent player cars and the other player vehicle do not interfere (collide or touch).

A message log display box 24 for displaying content of chat with other players (message interchange) is provided on the upper left of the lobby screen, and an address book display box 32 for displaying other player IDs is provided to the right of this message log display box. A message input box 26 is provided below the message log display box 24, and to the right of this there are provided transmission mode switching buttons 28 and 30 for setting whether to transmit message character strings input to the message input box 26 to all players (clients 16) or to selected payers (clients 16).

After each player has logged in to the game server 12 from the client 16, each client 16 is set to lobby mode, and the lobby screen shown in Fig. 1 is displayed on a monitor (household television receiver or computer display). Then, an input unit such as dedicated vehicle game controller provided with handle and accelerator, a keyboard, or a game controller is operated while looking at the lobby screen, and the player's own player car is caused to travel along the looped course 20. At this time, position information for the player car is generated by the client 16 based on signals input from the input unit, and that position information is transmitted to the game server 12. This position information is received from the game server 12 by the other clients 16, and an image of the vehicle is displayed based on that position information.

While sharing virtual space among a plurality of clients 16 in this manner, each player operates their own player car in that virtual space. Also, in lobby mode, it is possible to carry out chat with other players, as required. Specifically, on the lobby screen, if a command input to switch from player car operation mode (object operation mode) to message input mode using the input unit, generation of position information that was being carried out up until then based on signals input from the input unit is suspended, limitation is imposed to an extent based on signals input from the input unit from that point in time, and position information for the player car is generated automatically or semi-automatically. This position information is then transmitted to the game server 12.

In more detail, in the message input mode position of the player car is generated automatically or semi-automatically based not on signals input from the input unit but based on the shape of the looped course 20 and the position of other vehicle objects. Also, especially at this point, position information is generated so as to maintain a space between the player car being corresponding to the client 16 and a player car being corresponding to another client 16 at the current distance or a specified distance. For that reason, it is possible to prevent variations in game conditions during message input.

In the message input mode, for example, only accelerator commands input from the input unit may be received, and based on that the position information for the player car may be generated semi-automatically. In the message input mode, therefore, it is possible for the player car to be operated automatically or semi-automatically, to enable a user to concentrate on message input.

In lobby mode, if start conditions for a competition between a particular player and another player are established, that information (client specific information) are registered in the game server 12. In this case, a player car corresponding to one server 16 is made to move to the rear of the player car being corresponding to the other client 16, and if the competition is entered into as a result of a signal operation (for example, flashing headlights) using the input unit a competition request designating the ID of the other player is transmitted to the game server 12 from the one client 16, and the request is registered in the game server 12. At the game server 12, the fact that there is a competition request and the ID of the player making the competition request is then transmitted to the client 16 of the opposing player. If the competition request is received at the client 16 of the opposing player, a signal operation such as flashing headlights is caused at the player car following operation of the player car by the player making the competition request. This state is displayed on the lobby screen in the client 16 of the opposing player. After that, the game server 12 determines competition start conditions, registers the IDs of both players as client specific information, and transmits a mode change command to change from lobby mode to competition mode to the clients 16 being used by both players.

If a player receiving a flashing headlights signal or the like from a following player car performs a rejection operation using the input unit, competition refusal information is transmitted to the game server 12, and the 12 receiving the competition refusal information can determine that the competition start conditions have not been established. Also, if a player receiving a signal such as flashing headlights from a following player car consents to the competition using a competition consent operation (for example, hazard light) using the input unit, it is possible to transmit competition consent information designating the ID of the opposing player from the client 16 of the opposing player to the game server 12. In this case, at the game server 12 if corresponding competition consent information is received within a specified time from registration of the competition request, it can be determined that a competition start conditions have been established.

With this network game system 10, the above described rendering is adopted relating to success or failure of competition start conditions, but it is also possible to adopted other rendering. Also, although description has been given for only a competition between two players, it is also possible to execute a competition between a player car operated by a player and a non-player car operated by the game server 12.

At the client 16 receiving a mode change command from the lobby mode to competition mode from the game server 12, the mode of the device itself is caused to shift from lobby mode to competition mode, and the competition screen shown in Fig. 4 is displayed. The competition screen shown in Fig. 4 is displayed on the client 16 corresponding to the player car 34, when with the lobby screen shown in Fig. 3 displayed, any of the clients 16 handling the player cars 34 or 40 shifts from the lobby mode to the competition mode. With the competition screen shown in Fig. 4, similarly to the lobby screen, virtual space is mainly displayed with an appearance looking from a point of view set to the rear of the player car 34 corresponding to the client 16. Also, differing from the lobby mode, in the competition mode position information transferred from the game server 12 is limited. Specifically, only position information generated on the clients 16 for the competitors and transmitted to the game server 12 is transferred. In more detail, this position information includes position information for competitors player cars, and also position information for non-player cars generated in the client 16 used by the competing players. Position information generated in other clients 16 (clients in lobby mode) and transmitted to the game server 12, and position information generated in the game server 12, are not transferred to the clients 16 that are in competition mode. As a result, at the client 16 lobby mode is transferred to competition mode, and when the lobby screen is changed and the competition screen is displayed on a monitor player cars for players other than the competing players and non-player cars disappear from the screen. Alternatively, non-player cars for which position information is generated in the device itself and the competing players clients 16 appear on the screen. In the event that the player cars and non-player cars are deleted or registered, over a specified period of time images relating to these vehicle objects are displayed in a semitransparent or flashing manner, and while that is taking place it is possible to suppress interference processing such as collision and contact.

If there is a shift to competition mode in this way, a car chase unfolds with each player operating their own player car, with the object being to reduce the opponent's points to zero as quickly as possible. As shown in Fig. 4, a competition gauge 42 is displayed at an upper part of the competition screen, making it possible to intuitively grasp the current points of the two players. Specifically, the competition gauge 42 contains a player gauge 44 for the player using the client 16, and a rival gauge 46 for the player who is the opponent in this competition. The length of the player gauge 44 is controlled according to the points currently held by the player using the client 16, transmitted from the game server 12. Similarly, the length of the rival gauge 46 is controlled according to the points currently held by the player who is the opponent, transmitted from the game server 12.

As described above, two players participate in a car chase while watching the competition screen, and if the game server 12 determines that the points for any player has become zero, a victory or defeat notification is transmitted from the game server 12 to the clients 16 of both players. In the client 16 receiving the victory or defeat notification, after display of victory or defeat notification screen depending on the notification, a mode change from the competition mode to lobby mode is notified to the game server 12. In response to this, the game server 12 changes an competing flag, which will be described later, to cause the operating mode of the client 16 to shift from competition mode to lobby mode, as well as carrying out transfer reference for the lobby mode to start transfer of position information of each vehicle object to the client 16. Also, after the mode change has been notified to the game server 12 at the client 16, interference processing for player cars operated by a player of the client 16 and other vehicle objects is limited for a fixed time. This interference processing includes so-called hit check processing, and if there is collision or contact between objects, it includes associated processing to change movement direction of vehicle objects in response to that. Limitation of this interference processing can be continued until it is confirmed that there is no interference state for the player car and other vehicle objects, or can be continued for only a predetermined delay time. It is also possible to continue until a distance between the player car and other vehicle objects are a specified distance or greater apart.

Processing of this network game system 10 will be described in more detail in the following.

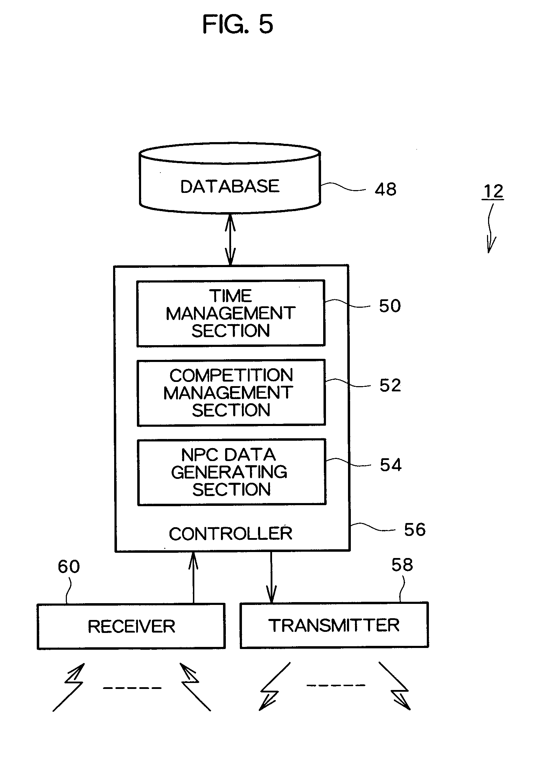

Fig. 5 is a functional block diagram of the game server 12. As shown in Fig. 5, functions implemented by the game server 12 include a database 48, controller 56, receiver 60 and transmitter 58. The controller 56 is made up of a time management section 50, a competition management section 52, and an NPC data generating section 54. These functional blocks are implemented by executing specified programs in the game server 12, being a computer system.

First of all, the database 48 is configured to contain, for example, memory or a hard disk storage device, and stores authentication information, an address table, vehicle position table for lobby mode, and vehicle position table for competition mode, etc. The authentication information includes a IDs and passwords for users of this network game, which are read out when a player logs in from the clients 16. Also, the address table contains addresses on the internet 14 of the clients 16 used by each player during login. The transmitter 58 references this address table and transfers data. The vehicle position table for lobby mode contains position information to be transferred to clients 16 in lobby mode, while the vehicle position table for competition mode contains position information to be transferred to clients 16 in competition mode.

The controller 56 controls the entire game server 12, and registers position information received by the receiver 60 in the database 48, and reads out position information from the database 48 for transmission by the transmitter 58. The controller 56 is also responsible for user authentication processing, competition management and chat message transfer.

In particular, the time management section 50 manages unification of time in virtual space. The time managed by the time management section 50 can be related to time in the real world, but does not have to have any relationship to real time. Also, the time management section 50 carries out processing to obtain duration (delay time) when transmitting data from each client 16 to the game server 12, and duration (delay time) when transmitting data from the game server 12 to each client 16.

The competition management section 52 transfers position information to clients 16 in competition mode, manages points for both players, and determines victory or defeat, to carry out overall competition management. The NPC data generating section 54 generates position data for non-player cars transmitted to the clients 16 in lobby mode, and registers that data in the database 48. The NPC data generating section 54 generates position data for non-player cars using, for example, data of the looped course 20 and a known automatic operation program.

The transmitter 58 transfers vehicle object position information and messages, and transmits various commands and notifications from the game server 12. The receiver 60 receives vehicle object position information and various commands and notifications from the clients 16.

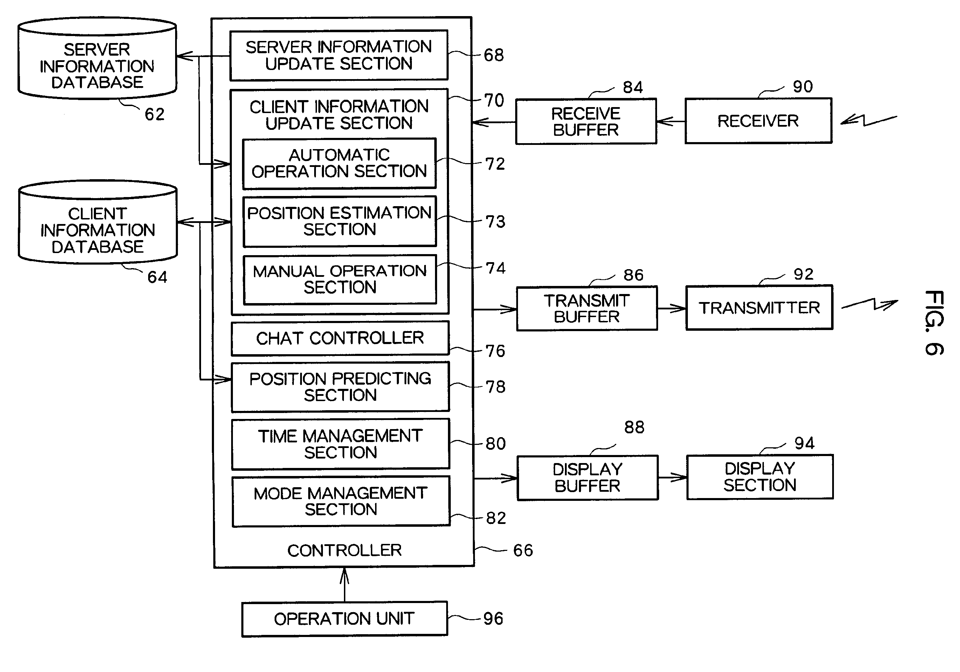

Fig. 6 is a functional block diagram of a client 16. As shown in Fig. 6, functions implemented by the client 16 include a server information database 62, a client information database 64, a controller 66, an operation unit (input means) 96, a receive buffer 84, a receiver 90, a transmit buffer 86, a transmitter 92, a display buffer 88, and a display section 94. Also, the controller 66 contains a server information update section 68, a client information update section 70, a chat controller 76, a position predicting section 78, a time management section 80, and a mode management section 82. Also, the client information update section 70 includes an automatic operation section 72, a position estimation section 73 and a manual operation section 74. These functional blocks are implemented by executing specific programs on the client 16, being a computer system.

The controller 66 controls the entire client 16. The receiver 90 receives position information and various information from the game server 12 via the internet 14. The receive buffer 84 is constituted by a memory, and temporarily stores various information received from the receiver 90. The server information database 62 is constituted by, for example, memory or a hard disk storage device, and stores a lobby mode vehicle position table or a competition mode vehicle position table received from the game server 12. The server information update section 68 updates the lobby mode vehicle position table or the competition mode vehicle position table stored in the server information database 62 based on position information stored in the receive buffer 84.

The client information database 64 is constituted, for example, by memory or a hard disk storage device, and stores real time vehicle data, including current position, current attitude and current speed vectors for each vehicle object being managed by the client 16. Space data representing the virtual space shown in Fig. 2 and moving object data are stored in the client information database 64. The client information update section 70 updates real time vehicle data stored in the client information database 64 based on the lobby mode vehicle position table or competition mode vehicle position table stored in the server information database 62, real time vehicle data, space data and moving object data stored in the client information database 64, and operation signals input using the operation unit 96. In particular, the manual operation section 74 included in the client information update section 70 is for generating real time vehicle data for the player car in player car operation mode (non-message input mode), and generates real time vehicle data (current position data) for the player car based on a lobby mode vehicle position table or competition mode vehicle position table stored in the server information database 62, real time vehicle data, space data and moving object data stored in the client information database 64, and operation signals input using the operation unit 96. Also, the automatic operation section 72 is for generating real time vehicle data for the player car instead of the manual operation section 74 in message input mode, and, differing from the manual operation section 74, generates real time vehicle data (current position information) for the player car not based on operation signals from the operation unit 96. The operation unit 96 is constituted by, for example, a keyboard, mouse, game controller or vehicle controller, etc.

The position estimation section 73 generates real time vehicle data (estimated current position information) likely to be currently generated in the other client 16, for vehicle objects (other managed cars) other than player cars and non-player cars (self managed car) for which position information is generated in the client 16. This processing is carried out based on position information for each other managed car stored in the server information database 62, real time vehicle data for the other managed cars stored in the client information database 64 immediately before. That is, the real time vehicle data stored in the client information database 64 includes current position information relating to the self managed car and estimated current position information relating to other managed cars.

Also, as will be described later, position information relating to a player car corresponding to another client 16 that is in competition mode is also stored in the lobby mode vehicle position table stored in the server information database 62 in lobby mode. These items of information are then stored correlated to a competition flag indicating the fact that competition mode is active. Therefore, at the client information update section 70, in lobby mode, interference processing for a player car corresponding to the other client 16 in competition mode, and other vehicle objects, is not carried out, and real time vehicle data relating to all vehicle objects is generated.

The client information update section 70 generates display data based on real time vehicle data relating to each vehicle obj ect, space data and moving object data stored in the client information database 64, and writes this data to the display buffer 88 constituted by memory. Then, the display section 94 that is constituted by a household television receiver or computer display reads out display data stored in the display buffer 88, and based on this display data displays a game screen such as the lobby screen or the competition screen. At this time, at the client information update section 70, in lobby mode, an image relating to a player car corresponding to the other client 16, in competition mode, is displayed distinctly from an image relating to other vehicle objects. For example, an image relating to a player car corresponding to the other client 16 in competition mode is displayed on the lobby screen in a semi-transparent manner, while images relating to the other vehicle objects are displayed in an opaque manner. In this way, the player can recognize the existence of player cars in competition mode at a glance.

The chat controller 76 is for controlling chat between clients 16. In more detail, in lobby mode, as well as displaying a message log display box 24, message input field 26, transmit mode switching buttons 28, 30 and address book display box 32 on the lobby screen, if a message input start command is received from the operation unit 96, the mode is switched from player car operation mode to message input mode, and for the client information update section 70 a command is issued so as to switch from generation of real time vehicle data using the manual operation section 74 to generation of real time vehicle data using the automatic operation section 72. Also, a message string input using the operation unit 96 is stored together with transmission destination information in the transmit buffer 86 constituted by memory. At this time, the message string input by a player is displayed in the message log display box 24. The transmission destination information stored together with the message string in the transmit buffer 86 is a player ID to be transmitted to in the case of individual transmission or, in the case of collective transmission, data indicating that fact, and is a command input using the operation unit 96 with reference to the transmission mode switching buttons 28, 30 and address book display box 32 displayed on the lobby screen. These message strings and transmission destination information are read out from the transmit buffer 86 at specified timing by the transmitter 92 and transmitted to the game server 12. At the game server 12, the received message string is then transferred to the clients 16 according to the transmission destination information.

The chat controller 76 reads out the message string that has been transferred by the game server 12 and received by the receiver 90 from the receive buffer 84, and additionally displays it in the message log display box 24. Also, if a message input termination command is received from the operation unit 96 the mode is switched from message input mode to player car operation mode, and a command is issued to the client information update section 70 to switch from generation of real time vehicle data using the automatic operation section 72 to generation of real time vehicle data using the manual operation section 74.

The position predicting section 78 generates real time vehicle data for a player car, and a non-player car having position information generated in a client 16, that is for self-managed cars, that is likely to have been generated by the client information update section 70, namely, predicted future position information. This predicted future position information is calculated based on real time vehicle data relating to an self-managed car and other managed car stored in the client information database 64, operation signals input from the operation unit 96 (representing accelerator opening amount, handle operating angle, brake depression angle, etc.) space data and moving object data etc. It is also possible, for example, to store a movement history of the self-managed car, that is a real time vehicle data history, and calculate the predicted future position information based on this history. It is also possible to store an operation signal history and calculate the predicted future position information based on this history. The future time at which the self-managed car is positioned at the position represented by the predicted future position information can be a time after a specified time has elapsed from the current time managed by the time management section 80. It is also possible to monitor communication conditions between the game server 12 and the client 16, for example, delay time, and to control the specified time accordingly. The position predicting section 78 then stores the predicted future position information for the self managed car, and the time for that position information, in the transmit buffer 86, and the client information update section 70 stores the current position information and current time of the self managed car in the transmit buffer 86. At the transmitter 92, a pairing of the current position information and the current time stored in the transmit buffer 86 are put together with a pairing of the predicted future position information and the future time, and transmitted to the game server 12 as position information.

The time management section 80 acts in cooperation with the time management section 50 provided in the game server 12 to manage current time for virtual space. Also, delay time between the game server 12 and the client 16 is measured. The mode management section 82 manages whether the client 16 is in lobby mode or competition mode. Also, acting in cooperation with the game server 12 control is carried out to change from lobby mode to competition mode, and change from competition mode to lobby mode.

The various data managed by the network game system 10 will be described in more detail in the following.

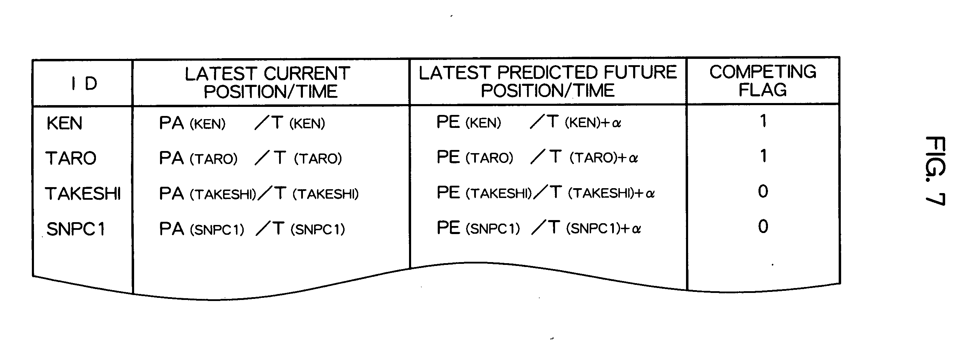

Fig. 7 is a drawing showing an example of a lobby mode vehicle position table stored in the database 48 contained in the game server 12. As shown in Fig. 7, the lobby mode vehicle position table respectively stores ID, latest current position and time of the latest current position, latest predicted future position and time of latest predicted future position, and competing flag for all players logged-in to the game server 12 and all non-player cars managed by the game server 12, in a correlated manner. The latest current position and the time of that latest current position are generated in the client 16 or the game server 12 for the corresponding player cars or non-player cars, and are the latest current position obtained in the game server 12, and the time at which the player car or non-player car was positioned at that position. The latest predicted future position and the future time of that latest predicted future position are generated in the client 16 or the game server 12 for the corresponding player cars or non-player cars, and are the latest future predicted position obtained in the game server 12, and the time at which the player car or non-player car will be positioned at that position. The competing flag represents whether or not the corresponding player car or non-player car is in a competition, and a "1" is stored for a client 16 that has defined competition start conditions and is in competition mode, while "0" is stored for a client 16 that is in lobby mode. At the game server 12, some records of the lobby mode vehicle position table shown in Fig. 7 is transmitted to the client 16. Specifically, for a client 16 that is in lobby mode, all records other than records corresponding to that client 16 are sent to that client 16. That part of the lobby mode vehicle position table that is transmitted in this way is stored in the server information database 62 in the client 16. It is also possible to select only records that are deemed to have high necessity and transmit those to the client 16, based on position information for each vehicle object.

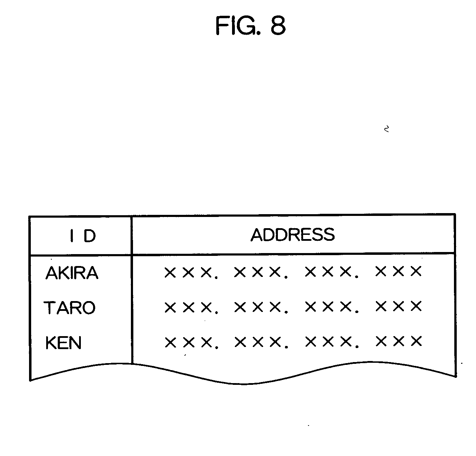

Fig. 8 is a drawing showing one example of an address table stored in the database 48 contained in the game server 12. As shown in Fig. 8, addresses of clients 16 used by each logged-in player are held at the game server 12 as a table. Each record of this table is generated, for example, at the time of login. At the transmitter 58 it is possible to specify transmission addresses of the lobby mode vehicle position data and competition mode vehicle data by referencing the address table shown in Fig. 8.

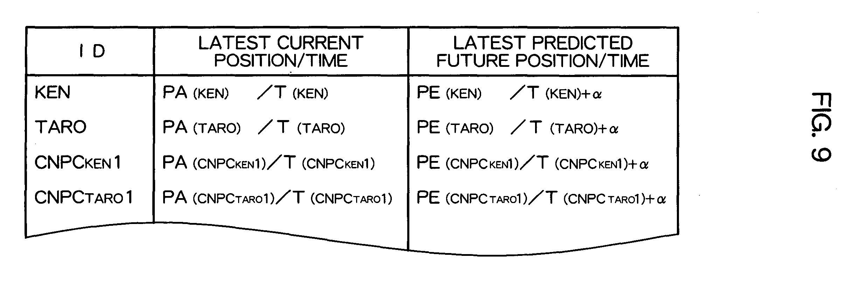

Fig. 9 is a drawing showing an example of a competition mode vehicle position table stored in the database 48 contained in the game server 12. Competition mode position tables shown in Fig. 9 are stored in the database 48 one at a time for a group of clients 16 in a competition, and for both player cars in a competition and all non-player cars managed by clients 16 in a competition, respectively stores ID, latest current position and time of the latest current position, latest predicted future position and time of latest predicted future position, with the content being similar to that of the lobby mode vehicle position table. At the game server 12, some records of the competition mode vehicle position table shown in Fig. 9 are transmitted to clients 16 corresponding to the table in Fig. 9. Specifically, for a client 16 that is in competition mode, all records other than records corresponding to that client 16, that is, all records relating to player cars and non-player cars whose current position and predicted future position are generated in competitor's clients 16, are transmitted to that client 16. That part of the competition mode vehicle position table that is transmitted in this way is stored in the server information database 62 in the client 16. It is also possible to select only records that are deemed to have high necessity and transmit those to the client 16, based on position information for each vehicle object.

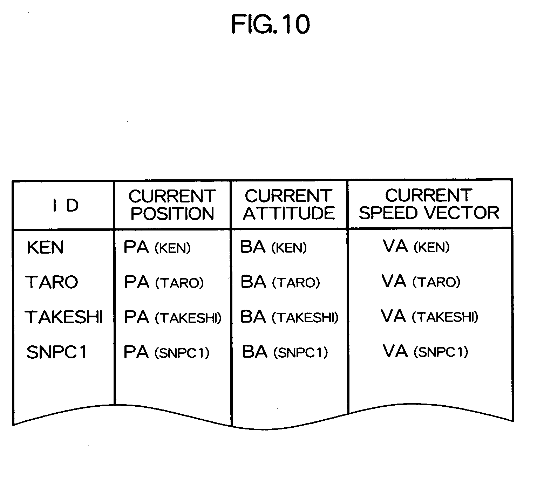

Fig. 10 is a drawing showing real time vehicle data stored in the client information database 64 contained in the client 16. As shown in Fig. 10, the real time vehicle data includes current position, current attitude, and current speed vectors (speed and direction of movement) for all vehicle objects arranged in virtual space managed by the client 16, and the client information database 64 stores real time vehicle data having this structure for a specified period of time including the latest data.

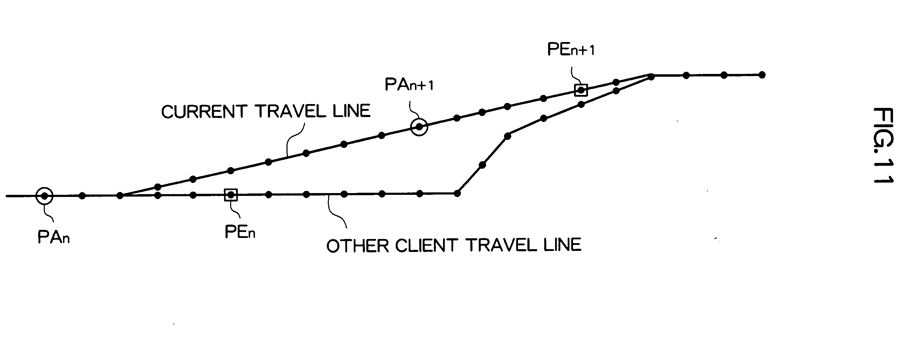

Also, Fig. 11 is a drawing for describing position estimation processing of the position estimation section 73 contained in the client 16. In Fig. 11, the upper line shows transitions of current position (real time vehicle data) for a particular vehicle object sequentially generated in a particular client 16. Specifically, the black dots on the upper line show the current position of a vehicle, and the circles show current position transmitted to the game server 12 and transferred to other clients 16. Also, the squares show predicted future position transmitted to the game server together with the current position, and transferred to the other clients 16. In Fig. 11, the lower line shows transitions in estimated current position of a vehicle object (real time vehicle data) sequentially generated in another client 16.

As shown in Fig. 11, in the position estimation section 73, by internally or externally dividing the latest current position PAn and the predicted future position PEn being transmitted from the game server 12 until now, a dummy estimated current position is calculated. Specifically, time relating to the current position PAn and time relating to the predicted future position PEn are also transmitted to the client 16 from the game server 12, and it is possible to calculate a current position that is likely to be generated at this time in the client 16 that generated the current position PAn for the vehicle object based on these items of information and current time being managed in the client 16. Estimated current position is then calculated based on this dummy estimated current position, and an estimated current position calculated immediately prior (adding one or more earlier than that is more preferable) (by calculating internal dividing points of the two positions, for example). In this manner, in the other clients 16 there is no sudden position change, and it is possible to cause a vehicle object to travel.

With the network game system 10 described above, it is possible to reduce traffic while achieving pseudo sharing of positions of player cars etc. sequentially changed in virtual space between clients 16. Also, it is possible to allow smooth transition of virtual space relating to a client in a competition (specified client) to another virtual space, and it is possible to avoid game space congestion. Also, since for a client 16 in a competition position information transmitted from other clients 16 is not transferred, it is possible to suppress communication traffic. Further, if a message input start command is issued, since a player car is automatically operated it is possible to easily participate in an on-line chat.

The spatial position sharing technique of the network game system described above can also be applied to other data sharing. For example, in a client 16 and a game server 12, by also receiving and transmitting attitude information, made up of current attitude information and predicted future attitude information, in addition to position information (current position information and predicted future position information) and sequentially calculating estimated current attitude information based on attitude information in each client 16, it is possible to achieve pseudo sharing of real time attitude of vehicle objects etc, across clients 16. It is also possible to apply the present invention not only to a system for pseudo sharing of position and attitude in virtual space, but also to pseudo sharing of various data such as length, angle, color, size, design, shape etc. generated in real time in one device, with another device.

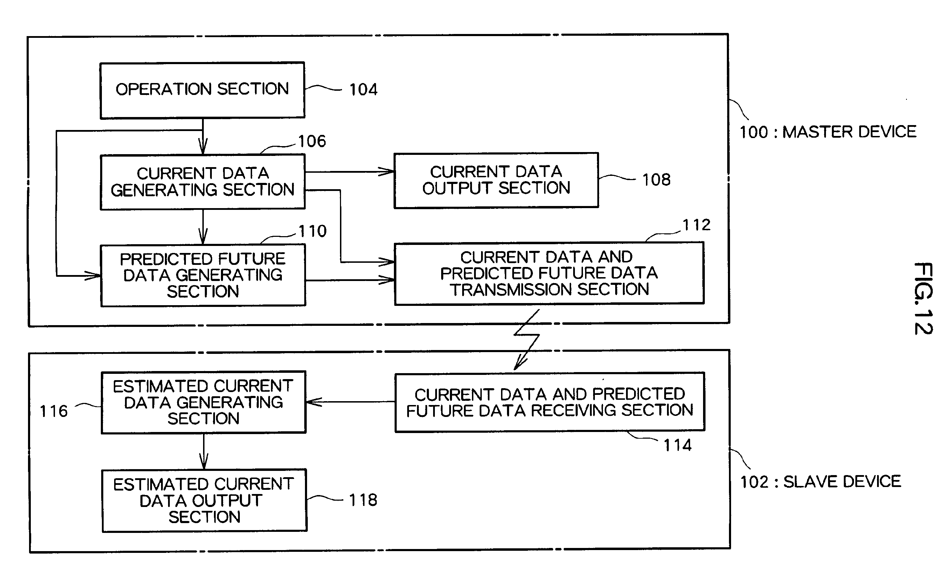

Fig. 12 is a drawing showing the structure of a data sharing system of one embodiment of the present invention. This data sharing system comprises a master device 100 and slave device 102. The master device 100 comprises an operation section 104, a current data generating section 106, a current data output section 108, a predicted future data generating section 110, and a current data and predicted future data transmission section 112. The slave device 102 comprises a current data and predicted future data receiving section 114, an estimated current data generating section 116, and an estimated current data display section 118.

Here, in the master device 100 the operation section 104 is used for a user to input operation signals. Also, the current data generating section 106 generates current data representing, for example, length, angle, color, size, deign and shape in real time based on the operation signal input using the operation section 104. The current data output section 108 outputs images and sound based on current data generated by the current data generating section 106. The predicted future data generating section 110 generates current data likely to be generated by the current data generating section 106 at a future time as predicted future data, based on current data generated by the current data generating section 106 and operation signals input using the operation section 104. The current data and predicted future data transmission section 112 transmits a pair of current data and current time, and a pair of predicted future data and a future time corresponding to the predicted future data. These items of data can be transmitted directly to the slave device 102, or relayed through another device. Further, by setting a time after a specified time has elapsed since the current time as the predicted future time, and storing the specified time in the master device 100 and the slave device 102, it is possible to do away with transmitting the predicted future time.

On the other hand, in the slave device 102, the current data and predicted future data receiving section 114 receives the data transmitted from the current data and predicted future data transmission section 112 of the master device 100. Also, the estimated current data generating section 116 estimates current data likely to be generated by the current data generating section 106 in the master device 100 at the current time based on data received by the current data and predicted future data receiving section 114, and generates estimated current data. The master device 100 and slave device 102 comprise some sort of time management means for managing time substantially synchronized in the two. The estimated current data output section 118 outputs images and sound based on estimated current data generated by the estimated current data generating section 116. In this way, it is possible to reduce output content due to the current data output section 108, output content due to the estimated current data display section 118 and traffic between the master device 100 and the slave device 102, while enabling substantial synchronization.

### INDUSTRIAL APPLICABILITY

The present invention is not limited to the above described embodiments. For example, the present invention can be applied not only to a vehicle racing game, but also to various network games. The present invention can also be applied to various communication systems and not just games.

## Claims

1. A spatial position sharing system, comprising a first device and a second device, the first device comprising
current position information generating means for sequentially generating current position information for a position shared object in virtual space,
predicted future position information generating means for sequentially generating predicted future position information for the position shared object in the virtual space; and
information transmission means for sequentially transmitting the generated current position information and predicted future position information,
the second device comprising
information receiving means for receiving the current position information and the predicted future position information transmitted from the first device; and
estimated current position information generating means for sequentially generating estimated current position information for the position shared object in the virtual space based on the received current position information and predicted future position information.

2. The system of claim 1, wherein the current position information represents current time, and position of the position shared object in the virtual space at that time.

3. The system of claim 1 or claim 2, wherein the predicted future position information represents predicted position of the position shared object in the virtual space.

4. The system of claim 3, wherein the predicted future position information also represents a future time at which the position shared object is at the predicted position in the virtual space.

5. The system of claim 4, wherein the predicted future position information generating means determines the future time based on communication conditions between the first and second devices.

6. The system of any one of claim 1 to claim 5, wherein the estimated current position information represents an estimation result for current position of the position shared object in the virtual space.

7. The system of any one of claim 1 to claim 6, wherein the current position information generating means sequentially generates the current position information based on operation information input by a user of the first device, and the predicted future position information generating means sequentially generates the predicted future position information based on the operation information.

8. The system of any one of claim 1 to claim 7, wherein the predicted future position information generating means generates the predicted future position information based on the current position information generated by the current position information generating means.

9. The system of claim 8, further provided with current position information storage means for multiply storing the current position information generated by the current position information generating means, and the predicted future position information generating means generating the predicted future position information based on a plurality of items of the current position information stored in the current position information storage means.

10. The system as disclosed in any one of claim 1 to claim 9, wherein the estimated current position information generating means newly generates the estimated current position information based on already generated estimated current position information.

11. The system of claim 10, wherein the estimated current position information generating means generates dummy estimated current position information for the position shared object in the virtual space based on the received current position information and the predicted future position information, and newly generates estimated current position information based on already generated estimated current position information and the dummy estimated current position information.

12. The system of claim 11, wherein the estimated current position information generating means generates a position of an internal dividing point or an external dividing point of a position represented by the received current position information or a position represented by the predicted future position information as the dummy estimated current position information.

13. The system of any one of claim 1 to claim 12, wherein the first device further comprises current attitude information generating means for sequentially generating current attitude information for the position shared object in the virtual space;
predicted future attitude information generating means for sequentially generating predicted future attitude information for the position shared object in the virtual space; and
attitude information transmission means for sequentially transmitting the generated current attitude information and the predicted future attitude information,
the second device further comprising
attitude information receiving means for receiving the current attitude information and the predicted future attitude information transmitted from the first device; and
estimated current attitude information generating means for sequentially generating estimated current attitude information for the position shared object in the virtual space based on the received current attitude information and predicted future attitude information.

14. A special position sharing device, comprising:
current position information generating means for sequentially generating current position information for a position shared object in virtual space;
predicted future position information generating means for sequentially generating predicted future position information for the position shared object in the virtual space; and
information transmission means for sequentially transmitting the generated current position information and predicted future position information.

15. A spatial position sharing device comprising:
information receiving means for receiving current position information for a position shared object in virtual space and predicted future position information of the position shared object in the virtual space sequentially generated in another device and sequentially transmitted from the other device; and
estimated current position information generating means for sequentially generating estimated current position information for the position shared object in the virtual space based on the received current position information and the predicted future position information.

16. A program for causing a computer to function as
current position information generating means for sequentially generating current position information for a position shared object in virtual space;
predicted future position information generating means for sequentially generating predicted future position information for the position shared object in the virtual space; and
information transmission means for sequentially transmitting the generated current position information and predicted future position information.

17. A program for causing a computer to function as
information receiving means for receiving current position information for a position shared object in virtual space and predicted future position information of the position shared object in the virtual space sequentially generated in another device and sequentially transmitted from the other device; and
estimated current position information generating means for sequentially generating estimated current position information for the position shared obj ect in the virtual space based on the received current position information and the predicted future position information.

18. A spatial position sharing method, comprising:
a current position information generating step for, in a first device, sequentially generating current position information of a position shared object in virtual space;
a predicted future position information generating step for, in the first device, sequentially generating predicted future position information of the position shared object in the virtual space;
an information transmission step for, in the first device, sequentially transmitting the generated current position information and predicted future position information;
an information receiving step for, in a second device, receiving the current position information and the predicted future position information transmitted from the first device; and
an estimated current position information generating step for, in the second device, sequentially generating estimated current position information for the position shared object in the virtual space based on the received current position information and the predicted future position information.

19. A spatial position sharing method, comprising:
an information receiving step for receiving current position information for a position shared object in virtual space and predicted future position information of the position shared object in the virtual space sequentially generated in another device and sequentially transmitted from the other device; and
an estimated current position information generating step for sequentially generating predicted future position information for the position shared object in the virtual space based on the received current position information and the predicted future position information.

20. A data sharing system comprising a first device and a second device, the first device comprising
current data generating means for sequentially generating current data,
predicted future data generating means for sequentially generating predicted future data; and
data transmission means for sequentially transmitting the generated current data and predicted future data,
the second device comprising
data receiving means for receiving the current data and the predicted future data transmitted from the first device; and
estimated current data generating means for sequentially generating estimated current data based on the received current data and predicted future data.

21. A data sharing system, comprising:
current data generating means for sequentially generating current data;
predicted future data generating means for sequentially generating predicted future data; and
data transmission means for sequentially transmitting the generated current data and the predicted future data.

22. A data sharing system, comprising:
data receiving means for receiving current data and predicted future data sequentially generated in another device and sequentially transmitted from the other device; and
estimated current data generating means for sequentially generating estimated current data based on the received current data and the predicted future data.

23. A program for causing a computer to function as:
current data generating means for sequentially generating current data;
predicted future data generating means for sequentially generating predicted future data; and
data transmission means for sequentially transmitting the generated current data and the predicted future data.

24. A program for causing a computer to function as:
data receiving means for receiving current data and predicted future data sequentially generated in another device and sequentially transmitted from the other device; and
estimated current data generating means for sequentially generating estimated current data based on the received current data and the predicted future data.

25. A data sharing method comprising:
a current data generating step for, in a first device, sequentially generating current data,
a predicted future data generating step for, in the first device sequentially generating predicted future data;
a data transmission step for, in the first device, sequentially transmitting the generated current data and the predicted future data,
a data receiving step for, in a second device, receiving the current data and the predicted future data transmitted from the first device; and
an estimated current data generating step for, in the second device, sequentially generating estimated current data based on the received current data and predicted future data.

26. A data sharing method comprising:
a data receiving step for receiving current data and predicted future data sequentially generated in another device and sequentially transmitted from the other device; and
an estimated current data generating step for sequentially generating estimated current data based on the received current data and predicted future data.

27. A network game system, including a server and a plurality of clients, wherein:
the plurality of clients respectively comprise
space data storage means for storing space data representing virtual space; and
position information transmission means for transmitting position information corresponding to the client for the virtual space to the server, and the server comprises
position information receiving means for receiving position information from the plurality of clients;
client specifying means for specifying some from among the plurality of clients; and
position information transfer means for transferring all or some of the position information received from the plurality of clients to the plurality of clients, while restricting transfer of position information received from clients that have not been specified by the client specifying means to clients that have been specified by the client specifying means, the plurality of clients respectively comprising
transfer data receiving means for receiving position information transferred from the server, and
game processing means for executing a game process based on position information received by the transfer data receiving means and space data stored in the space data storage means.

28. The system of claim 27, wherein
the position information transfer means separately transfers position information received from clients specified by the client specifying means, and position information received from clients not specified by the client specifying means, to the clients that have not been specified by the client specifying means, and
the game processing means separately displays an image relating to position information transmitted from clients specified by the client specifying means and an image relating to position information transmitted from clients not specified by the client specifying means.

29. The system of claim 28, wherein the game processing means limits interference processing between objects arranged at position represented by position information transmitted from clients that are specified by the client specifying means, and objects arranged at positions represented by position information transmitted by clients that are not specified by the client specifying means.

30. The system of any one of claim 27 to claim 29, further comprising specification cancellation means for canceling specification by the client specifying means, wherein, when specification by the client specifying means for a client containing the game processing means is canceled, the game processing means limits interference processing for objects arranged at positions represented by position information corresponding to the client, and objects arranged at positions represented by position information transmitted from clients that are not specified by the client specifying means, until a specified time.

31. A control method for a network game system comprising a server and a plurality of clients, comprising:
a position information transmission step, in each client, for transmitting position information corresponding to the client in virtual space to the server;
a position information receiving step, in the server, for receiving position information transmitted from the plurality of clients;
a client specifying step, in the server, for specifying some of the plurality of clients;
a position information transfer step, in the server, for transferring all or some of the position information received from the plurality of clients to the plurality of clients, while restricting transfer of position information received from clients that have not been specified in the client specifying step to clients that have been specified in the client specifying step;
a transferred data receiving step, in each client, for receiving position information transferred from the server; and
a game processing step, in each client, for executing game processing based on position information received in the transferred data receiving step and space data representing the virtual space.

32. A client, for a network game, used in a network game in which virtual space is shared by a plurality of clients, for causing movement of objects corresponding to each client in the virtual space, comprising:
input means for inputting signals;
mode determining means for determining whether an operating mode of the client is an object operation mode or a message input mode;
first position information generating means for, in the object operation mode, generating position information relating to a position of an object corresponding to the client based on signals input by the input means;
second position information generating means for, in the message input mode, generating position information relating to position of an object corresponding to the client while limiting an extent that the position information is based on signals input by the input means, instead of the first position generating means;
position information transmission means for transmitting the position information generated by the first or second position information generating means;
message information generating means for, in the message input mode, generating message information based on signals input by the input means; and
message information transmission means for transmitting the message information generated by the message information generating means.

33. The client of claim 32, wherein the second position information generating means generates position information relating to position of an object corresponding to the client so as to suppress variation in game conditions.

34. The client of claim 33, wherein the second position information generating means generates position information relating to position of an object corresponding to the client, based on a distance between the object corresponding to the client and an object corresponding to another client.

35. A program, for causing a computer to function as a client, for a network game, used in a network game in which virtual space is shared by a plurality of clients, for causing movement of objects corresponding to each client in the virtual space, the program causing the computer to function as:
input means for inputting signals;
mode determining means for determining whether an operating mode of the client is an object operation mode or a message input mode;
first position information generating means for, in the object operation mode, generating position information relating to a position of an object corresponding to the client based on signals input by the input means;
second position information generating means for, in the message input mode, generating position information relating to position of an object corresponding to the client while limiting an extent that the position information is based on signals input by the input means, instead of the first position generating means;
position information transmission means for transmitting the position information generated by the first or second position information generating means;
message information generating means for, in the message input mode, generating message information based on signals input by the input means; and
message information transmission means for transmitting the message information generated by the message information generating means.

36. A control method, for a client for, in a network game, used in a network game in which virtual space is shared by a plurality of clients, causing movement of objects corresponding to each client in the virtual space, comprising:
a mode determining step for determining whether an operating mode of the client is an object operation mode or a message input mode;
a first position information generating step for, in the object operation mode, generating position information relating to a position of an object corresponding to the client based on signals input by input means;
a second position information generating step for, in the message input mode, generating position information relating to position of an object corresponding to the client while limiting a degree to which the position information is based on signals input by the input means, instead of the first position generating step;
a position information transmission step for transmitting the position information generated in the first or second position information generating steps;
a message information generating step for, in the message input mode, generating message information based on signals input by the input means; and
a message information transmission step for transmitting the message information generated in the message information generating step.

37. Am information storage medium storing the program of claim 16, claim 17, claim 23, claim 24 and claim 35.
